# EUROPÄISCHE PATENTANMELDUNG

(11) **EP 2 907 988 A1**
(43) Veröffentlichungstag der Anmeldung: **19.08.2015**
(21) Anmeldenummer: 14155315.6
(22) Anmeldetag: 17.02.2014
(51) Int. Cl.: F02C 7/143, F02C 7/057, F02C 9/16

(54) **Verfahren zum Betreiben eines Verdichterstrangs und derselbe**

(71) Anmelder: Siemens Aktiengesellschaft, 80333 München (DE)
(72) Erfinder: Link, Marco, 47057 Duisburg (DE); Savilius, Nicolas, 45359 Essen (DE)

(57) **Zusammenfassung**

Die Erfindung betrifft ein Verfahren zum Betreiben eines Verdichterstrangs (10) aufweisend zumindest einen Verdichter (12) und zumindest eine Kühlvorrichtung (14) zum Kühlen zumindest eines Strömungsmediums (16) auf eine vorgebbare Verdichtertemperatur (Tver) bei dem eine Verdichteraustrittstemperatur (Taus-ist) ermittelt wird; diese Verdichteraustrittstemperatur (Taus-ist) mit einer Soll-Verdichteraustrittstemperatur (Taus-soll) verglichen wird und bei einer Abweichung von der ermittelten Verdichteraustrittstemperatur (Taus-ist) von der Soll-Verdichteraustrittstemperatur (Taus-soll) eine Maßnahme (18) unter Verwendung der Kühlvorrichtung (14) zum Verändern der Verdichtertemperatur (Tver) des Strömungsmediums (16) am Verdichtereintritt (20) und/oder im Verdichter eingeleitet wird.

Ferner betrifft die Erfindung eine Anordnung (32) zur Steuerung zumindest der Verdichtertemperatur (Tver) mittels zumindest der Kühlvorrichtung (14) und einen Verdichterstrang (10) mit einer solchen Anordnung (32) sowie ein Verfahren zum Betreiben eines Verdichterstrangs (10) aufweisend zumindest einen Verdichter (12) und zumindest eine Vorkühlung (14) zum Kühlen eines Strömungsmediums (16) bei dessen Eintritt in den Verdichter (12) und/oder sich befindend im Verdichter (12).

## Beschreibung

Die Erfindung betrifft ein Verfahren zum Betreiben eines Verdichterstrangs aufweisend zumindest einen Verdichter und zumindest eine Kühlvorrichtung zum Kühlen zumindest eines Strömungsmediums auf eine vorgebbare Verdichtertemperatur sowie eine Anordnung zur Steuerung zumindest der Verdichtertemperatur mittels zumindest der Kühlvorrichtung und einen oben genannten Verdichterstrang mit einer oben genannten Anordnung sowie ein Verfahren zum Betreiben eines Verdichterstrangs aufweisend zumindest einen Verdichter und zumindest einer Vorkühlung zum Kühlen eines Strömungsmediums bei dessen Eintritt in den Verdichter und/oder sich befindend im Verdichter.

Um eine Erhöhung eines Wirkungsgrads einer Gasturbine zu erreichen, werden ein Druckverhältnis und eine Turbineneintrittstemperatur stetig angehoben. Mit einem Ansteigen des Druckverhältnisses steigt auch eine Verdichteraustrittstemperatur stetig an. Am kritischsten ist ein Vollastbetrieb an einem heißest-möglichen Tag, da die Verdichteraustrittstemperatur mit der Verdichtereintrittstemperatur und damit der Umgebungstemperatur ansteigt. Ein Betrieb der Gasturbine mit zu hohen Temperaturen kann nachteilige Effekte auf einen Rotor und ein Gehäuse der Gasturbine haben. Um dies auszugleichen ist es bekannt auf temperaturresistentere Werkstoffe umzusteigen. Das erhöht jedoch auch die Kosten für Bauteile aus diesen Stoffen. Dem kann entgegengewirkt werden, indem ohne Einsatz teurerer Werkstoffe eine Leistungsabgabe der Gasturbine an heißen Tagen reduziert wird, um die Verdichteraustrittstemperatur unterhalb eines jeweiligen Werkstofflimits zu halten. Dadurch wird aber der Wirkungsgrad und somit ein Kundennutzen reduziert.

Aus dem Stand der Technik ist bekannt, zu einer Verminderung der Verdichtereintrittstemperatur im Volllastbetrieb der Gasturbine spezielle Kühlvorrichtungen, wie einen sogenannten Evap-Cooler, einen sogenannten Compressor Inlet Air Chiller (CIAC) oder die sogenannte Wet-Compression, vorzusehen. Durch das Hinzuschalten der Kühlvorrichtung im Vollastbetrieb kann nun eine hohe Leistung erzielt werden. Ein selektives Aktivieren der Kühlvorrichtung ist nicht vorgesehen. Dadurch kann es zu einem Leistungsüberschuss kommen, wodurch gewonnene Energie ungenutzt verschenkt wird.

Es ist eine Aufgabe der vorliegenden Erfindung ein Verfahren zum Betreiben eines Verdichterstrangs bereitzustellen, bei dem auch bei einem Betrieb an heißen Tagen ein hoher Wirkungsgrad erreicht werden kann. Ferner ist es eine Aufgabe der Erfindung eine Anordnung zur Steuerung zumindest einer Verdichtertemperatur mittels zumindest einer Kühlvorrichtung bereitzustellen, bei der die Steuerung zufriedenstellend möglich ist. Eine weitere Aufgabe der Erfindung ist es einen entsprechenden Verdichterstrang bereitzustellen, der an heißen Tagen effizient betreibbar ist. Des Weiteren ist es eine Aufgabe der Erfindung ein Verfahren zum Betreiben eines Verdichterstrangs aufweisend zumindest einen Verdichter und zumindest einer Vorkühlung zum Kühlen eines Strömungsmediums bei dessen Eintritt in den Verdichter und/oder sich befindend im Verdichter bereitzustellen, das einen Betrieb zuverlässig ermöglicht.

Diese Aufgaben werden erfindungsgemäß gelöst mit Verfahren, einer Anordnung und einem Verdichterstrang mit den Merkmalen der unabhängigen Ansprüche. Günstige Ausgestaltungen und Vorteile der Erfindung ergeben sich aus den weiteren Ansprüchen und der Beschreibung.

Die Erfindung geht aus von einem Verfahren zum Betreiben eines Verdichterstrangs aufweisend zumindest einen Verdichter und zumindest eine Kühlvorrichtung zum Kühlen zumindest eines Strömungsmediums auf eine vorgebbare Verdichtertemperatur bei dem eine Verdichteraustrittstemperatur ermittelt wird; diese Verdichteraustrittstemperatur mit einer Soll-Verdichteraustrittstemperatur verglichen wird und bei einer Abweichung von der ermittelten Verdichteraustrittstemperatur von der Soll-Verdichteraustrittstemperatur eine Maßnahme unter Verwendung der Kühlvorrichtung zum Verändern der Verdichtertemperatur des Strömungsmediums am Verdichtereintritt und/oder im Verdichter eingeleitet wird.

Durch das erfindungsgemäße Verfahren kann vorteilhaft eine Betriebssicherheit, speziell an warmen Standorten, erhöht werden. Zudem ermöglicht das erfindungsgemäße Verfahren eine flexible Nutzung von Komponenten des Verdichterstrangs. Ferner können Bauteile des Verdichterstrangs, wie beispielsweise ein Gehäuse oder ein Rotor, aus Werkstoffen gefertigt sein, die weniger temperaturresistent sind und damit preisgünstiger sind als Bauteile aus temperaturresistenten Werkstoffen. Gegenüber Systemen des Standes der Technik kommt es vorteilhaft zu einem Absenken des Temperaturverlaufs entlang des Verdichterstrangs. Durch die günstigeren Materialien kann sich auch eine vereinfachte Geometrie, beispielsweise dünnere Wände, gegenüber Bauteilen oder Anordnungen des Standes der Technik ergeben, was in einer vereinfachten Montage und verringerten Montagekosten resultieren kann.

Zudem kann der Verdichterstrang gegenüber einem System des Standes der Technik, bei dem dieselbe Werkstoffwahl getroffen wurde, auf einen höheren Verdichterenddruck ausgelegt werden. Hierbei kann vermieden werden, dass ab einer gewissen Umgebungstemperatur ein Belastungslimit des Werkstoffs überschritten wird. Zudem kann der Verdichterstrang somit bei einer höheren Umgebungstemperatur auf Volllast betrieben werden als es die eigentliche Werkstoffauswahl zulassen würde. Ferner wird die Entstehung von Schadstoffen, wie NOₓ und CO, verhindert.

In diesem Zusammenhang und im weiteren Text soll unter "vorgebbar" auch "vorgegeben" und unter "ermittelten" "gemessenen", "bestimmt" oder "errechnet" verstanden werden. Ein Verdichterstrang stellt hier eine Abfolge von zumindest zwei Bauteileinheiten dar. Hierbei kann die Bauteileinheit beispielsweise eine Kühleinheit, eine Kompressoreinheit, eine Brennereinheit oder eine Turbineneinheit sein. Solch ein Verdichterstrang ist beispielsweise ein Teil einer Turbine bzw. Gasturbine oder stellt diese dar.

Eine Verdichtertemperatur kann hier eine Verdichtereintrittstemperatur (TV1) oder eine Temperatur im Verdichter selbst darstellen. Hierbei muss die Temperatur im Verdichter nicht konstant sein, sondern kann stromabwärts nach dem Verdichtereintritt eine andere sein wie am Verdichteraustritt. Unter einer "vorgebbaren Verdichtertemperatur" soll eine Temperatur des Strömungsmediums verstanden werden, die dieses vorteilhafterweise haben soll, um einen effektiven, verlustfreien Betrieb mit einem hohen Wirkungsgrad zu ermöglichen. Diese vorgebbare Verdichtertemperatur wird der Fachmann aufgrund seiner Fachkenntnis selbständig festlegen und beträgt beispielsweise für die Verdichtereintrittstemperatur zwischen 5°C und 30°C.

Als Soll-Verdichteraustrittstemperatur wird beispielsweise ein führendes Belastungs- bzw. Temperaturlimit eines Materials eines Bauteils des Verdichterstrangs, wie beispielsweise ein Gehäuse oder ein Rotor, gewählt. Die Soll-Verdichteraustrittstemperatur kann in einer Steuereinheit und/oder Recheneinheit des Verdichterstrangs hinterlegt sein (vorgebbare Verdichteraustrittstemperatur) oder sie kann während eines Betriebs des Verdichterstrangs ermittelt werden und *in situ* verwendet werden (ermittelbare Verdichteraustrittstemperatur). Unter einer "Maßnahme unter Verwendung der Kühlvorrichtung" soll jede, vom Fachmann für anwendbar erachtete Maßnahme verstanden werden, die zu einer Veränderung der Verdichtertemperatur führt.

Des Weiteren wird vorgeschlagen, dass - mittels der Maßnahme - ein Massenstrom eines die Kühlvorrichtung betreibenden Kühlmediums verändert, insbesondere erhöht, wird. Dadurch kann die Verdichtertemperatur mittelbar beeinflusst und reduziert werden. Alternativ und/oder zusätzlich kann vorgesehen sein, dass - mittels der Maßnahme - eine Temperatur eines die Kühlvorrichtung betreibenden Kühlmediums verändert, insbesondere verringert, wird. Hierdurch ergibt sich die effektivste Kühlung des Strömungsmediums am Verdichtereintritt und/oder im Verdichter. Hierbei kann es sich bei beiden Kühlmethoden um das gleiche Kühlmedium oder um unterschiedliche Kühlmedien handeln.

Vorteilhafterweise wird die Maßnahme zumindest solange durchgeführt, bis maximal eine vorgebbare Maximalverdichteraustrittstemperatur erreicht wird. Hierdurch wird ein für Bestandteile des Verdichterstrangs schädlicher und gefährlicher Betrieb verhindert. Die vorgebbare Maximalverdichteraustrittstemperatur wird beispielsweise durch ein Material eines Bauteils vorgegeben, wobei dieses Material im Vergleich zu den anderen verwendeten Materialien das geringste Temperaturlimit aufweist. Die Maximalverdichteraustrittstemperatur kann identisch sein mit der Soll-Verdichteraustrittstemperatur oder größer sein als diese. Im letzteren Fall kann die Soll-Verdichteraustrittstemperatur gemäß einer weiteren Randbedingung eingestellt werden bzw. eine weitere Randbedingung festlegen. Dadurch wäre ein Eingriff von außen, insbesondere unabhängig von Bauteilgegebenheiten, möglich. Dies erhöht die Flexibilität der Nutzung des Verdichterstrangs weiter.

Ferner ist es vorteilhaft, wenn die Maximalverdichteraustrittstemperatur durch eine Wahl zumindest eines Materials eines Rotors und/oder eines Gehäuses des Verdichterstrangs bestimmt wird. Hierdurch können Bauteile, die besonders durch hohe Temperaturen belastet sind, sinnvoll geschützt werden, wodurch sich ihre Haltbarkeit verlängert. Unter "bestimmt" soll hier auch "limitiert" verstanden werden. Der Rotor und das Gehäuse sind beispielsweise die der Kompressoreinheit bzw. des Verdichters. Es ist auch denkbar, Bauteilmaterialien abhängig von der Position des entsprechenden Bauteils im Verdichterstrang und von Temperaturen, die an diesen Positionen vorherrschen, zu wählen. Bei Positionen an denen geringere Temperaturen auftreten, können weniger temperaturresistente Materialien verwendet werden wie an Positionen mit höheren Temperaturen.

In einer weiteren Ausgestaltung der Erfindung wird vorgeschlagen, dass die Maßnahme mittels eines so genannten Evap-Coolers bewirkt wird. In anderen Worten, die Kühlvorrichtung ist ein Evap-Cooler. Hiermit kann der Massenstrom des Kühlmediums bzw. ein Wassermassenstrom konstruktiv einfach erhöht werden. Zudem ist ein solcher Kühler technisch unkomplex aufgebaut und damit preisgünstig.

Ferner wird vorgeschlagen, dass die Maßnahme mittels der sogenannten Wet-Compression bewirkt wird. Dadurch kann effektiv erreicht werden, dass sich der Massenstrom des Kühlmediums bzw. der Wassermassenstrom erhöht und sich die Temperatur des Strömungsmediums am Verdichtereintritt und/oder im Verdichter erniedrigt. Mittels Wet-Compression kann eine besonders hohe Leistung erzielt werden. Auch ergibt sich wegen des sogenannten intercooling Effekts ein hoher Wirkungsgrad des Verdichters. Der Einsatz von Wet-Compression eignet sich besonders für den Spitzenlastbedarf und für Standorte mit hohen Umgebungstemperaturen.

Bevorzugt wird die Maßnahme mittels eines sogenannten Compressor Inlet Air Chillers (CIAC) bewirkt. In anderen Worten, die Kühlvorrichtung ist ein Compressor Inlet Air Chiller. Mittels eines Compression Inlet Air Chiller kann die Temperatur des Kühlmediums am effektivsten und schnell verringert werden. Ferner ist ein CIAC unabhängig von einer Umgebungstemperatur und kann auch unabhängig von einer Wasserversorgung betreiben werden. Dadurch eignet er sich besonders für heiße, wasserarme Standorte.

In einer bevorzugten Ausgestaltung wird die Maßnahme bei Volllast oder bei Teillast des Verdichterstrangs eingeleitet. Somit kann auch bei Teillast gewährleitet werden, dass durch den Einsatz der Maßnahme die Verdichteraustrittstemperatur unter dem gesetzte Temperaturlimit bleibt. Zudem können Betriebsanforderungen des Verdichterstrangs so einfach auf einen gegenwärtigen Energiebedarf angepasst werden. Ein Verschenken von gewonnener Energie unterbleibt, was Betriebskosten einspart. Es ergibt sich also ein flexibler Einsatz der Komponenten des Verdichterstrangs. Die Formulierung "bei Volllast/Teillast" soll als "unter Volllast/Teillast" verstanden werden.

Unter dem Sachverhalt, dass "die Maßnahme eingeleitet wird" soll ein Zeitpunkt einer Aktivierung der Maßnahme verstanden werden. Was nach der Aktivierung passiert bzw. wie der Verdichterstrang danach betrieben wird, ob weiter in Volllast/Teillast oder geändert in Teillast/Volllast ist irrelevant. Bevorzugt wird die Maßnahme bei Teillast eingeleitet/aktiviert und infolge der Aktivierung der Maßnahme und deren Betrieb für eine gewisse Zeit kann der Verdichterstrang unter einer höheren Teillast oder sogar unter Volllast betrieben werden. Um dies zu erreichen ist es auch möglich die Maßnahme zu einem höheren Grad zu aktivieren.

Es wird ferner vorgeschlagen, dass das Verfahren zu einer Steuerung und/oder Regelung der Verdichteraustrittstemperatur eingesetzt wird. Dadurch kann der Verdichterstrang komfortabel gesteuert werden. Unter der Wendung, dass das "Verfahren zu einer Steuerung/Regelung der Verdichteraustrittstemperatur eingesetzt wird" soll verstanden werden, dass mittels des Verfahrens die Verdichteraustrittstemperatur angesteuert bzw. geregelt wird.

Eine bevorzugte Anwendung besteht darin, dass das Verfahren zu einer Regelung der Verdichteraustrittstemperatur eingesetzt wird, wobei bei dem Verfahren eine Regelgröße die Verdichteraustrittstemperatur ist; eine Stellgröße der Massenstrom eines Kühlmediums und/oder die Temperatur eines Kühlmediums ist und mittels der Maßnahme, insbesondere unter Verwendung der Kühlvorrichtung, zum Verändern der Verdichtertemperatur des Strömungsmediums, insbesondere am Verdichtereintritt und/oder im Verdichter, eine Änderung der Stellgröße bewirkt wird. Dadurch können Betriebsparameter gezielt auf die Gegebenheiten des Verdichterstrangs und seiner Umgebung angepasst werden. Des Weiteren ist die Verdichteraustrittstemperatur ein gut zu messender Parameter.

Die Erfindung geht ferner aus von einer Anordnung, insbesondere einem Regler, zur Steuerung zumindest einer Verdichtertemperatur mittels zumindest einer Kühlvorrichtung, mit einer Ermittlungseinrichtung eingerichtet derart, dass eine Verdichteraustrittstemperatur ermittelbar ist; und mit einer Steuereinheit eingerichtet derart, dass die Verdichteraustrittstemperatur mit einer Soll-Verdichteraustrittstemperatur vergleichbar ist und wenn die ermittelte Verdichteraustrittstemperatur von der Soll-Verdichteraustrittstemperatur abweicht, eine Maßnahme unter Verwendung der Kühlvorrichtung zum Verändern der Verdichtertemperatur des Strömungsmediums am Verdichtereintritt und/oder im Verdichter einleitbar ist.

Durch die erfindungsgemäße Ausgestaltung kann vorteilhaft ein sicherer Betrieb, speziell an warmen Standorten, gewährleistet werden. Ferner wird eine flexible Nutzung von Komponenten des Verdichterstrangs bereitgestellt. Zudem können Bauteile des Verdichterstrangs, im Vergleich zu Systemen des Standes der Technik, aus weniger temperaturresistenten Werkstoffen gefertigt und damit preisgünstiger hergestellt werden. Ferner kann der Verdichterstrang gegenüber einem System des Standes der Technik, bei dem dieselbe Werkstoffwahl getroffen wurde, auf einen höheren Verdichterenddruck ausgelegt werden. Damit kann vermieden werden, dass ab einer gewissen Umgebungstemperatur ein Belastungslimit des Werkstoffs überschritten wird. Zudem kann der Verdichterstrang somit bei einer höheren Umgebungstemperatur auf Volllast betrieben werden als es die eigentliche Werkstoffauswahl zulassen würde. Ferner wird die Entstehung von Schadstoffen, wie NOₓ und CO, verhindert. Des Weiteren kann ein erfindungsgemäßer Regler einfach aufgebaut werden, da die Verdichteraustrittstemperatur ein gut messbarer Parameter ist.

Die Erfindung geht ferner aus von einem Verdichterstrang mit zumindest einem Verdichter und einer Kühlvorrichtung zum Kühlen zumindest eines Strömungsmediums auf eine vorgebbare Verdichtertemperatur sowie mit einer erfindungsgemäßen Anordnung.

Durch die erfindungsgemäße Realisierung kann vorteilhaft ein sicher zu betreibender Verdichterstrang bereitgestellt werden. Zudem können Komponenten des Verdichterstrangs flexibel genutzt werden. Des Weiteren können Bauteile des Verdichterstrangs, wie beispielsweise ein Gehäuse oder ein Rotor, aus weniger temperaturresistenten Werkstoffen gefertigt sein und sind damit preisgünstiger als Bauteile aus temperaturresistenten Werkstoffen. Durch die günstigeren Materialien kann sich auch eine vereinfachte Geometrie gegenüber Bauteilen oder Anordnungen des Standes der Technik ergeben, was in einer vereinfachten Montage und verringerten Montagekosten resultieren kann. Auch kann der Verdichterstrang gegenüber Systemen des Standes der Technik auf einen höheren Verdichterenddruck ausgelegt werden. Somit kann vermieden werden, dass ab einer gewissen Umgebungstemperatur ein Belastungslimit des Werkstoffs überschritten wird. Zudem kann der Verdichterstrang hierdurch bei einer höheren Umgebungstemperatur auf Volllast betrieben werden als es die eigentliche Werkstoffauswahl zulassen würde. Auch die Entstehung von Schadstoffen, wie NOₓ und CO, wird unterbunden.

Der Verdichterstrang ist ferner betreibbar nach dem erfindungsgemäßen Verfahren.

Die Erfindung geht zudem aus von einem Verfahren zum Betreiben eines Verdichterstrangs aufweisend zumindest einen Verdichter und zumindest eine Vorkühlung zum Kühlen eines Strömungsmediums bei dessen Eintritt in den Verdichter und/oder sich befindend im Verdichter, wobei bei dem Verfahren unter Verwendung des Vorkühlers eine Verdichteraustrittstemperatur des im Verdichter verdichteten Strömungsmediums gesteuert wird.

Durch das erfindungsgemäße Verfahren kann vorteilhaft ein leicht zu messender Parameter zu einer Steuerung des Betriebs des Verdichterstrangs herangezogen werden. Ein solcher Betrieb ist vorteilhafterweise sicher und zuverlässig, vor allem an warmen Standorten. Dadurch ist zudem im Vergleich zu Systemen des Standes der Technik eine Auslegung des Verdichterstrangs auf einen höheren Verdichterenddruck möglich. Auch ergibt sich eine flexible Nutzung von Komponenten des Verdichterstrangs.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Es zeigen:
- FIG 1: einen Schnitt durch einen erfindungsgemäßen Verdichterstrang mit einer Anordnung zur Steuerung einer Verdichtertemperatur und
- FIG 2: eine schematische Darstellung eines Regelkreislaufs der Anordnung der FIG 1.

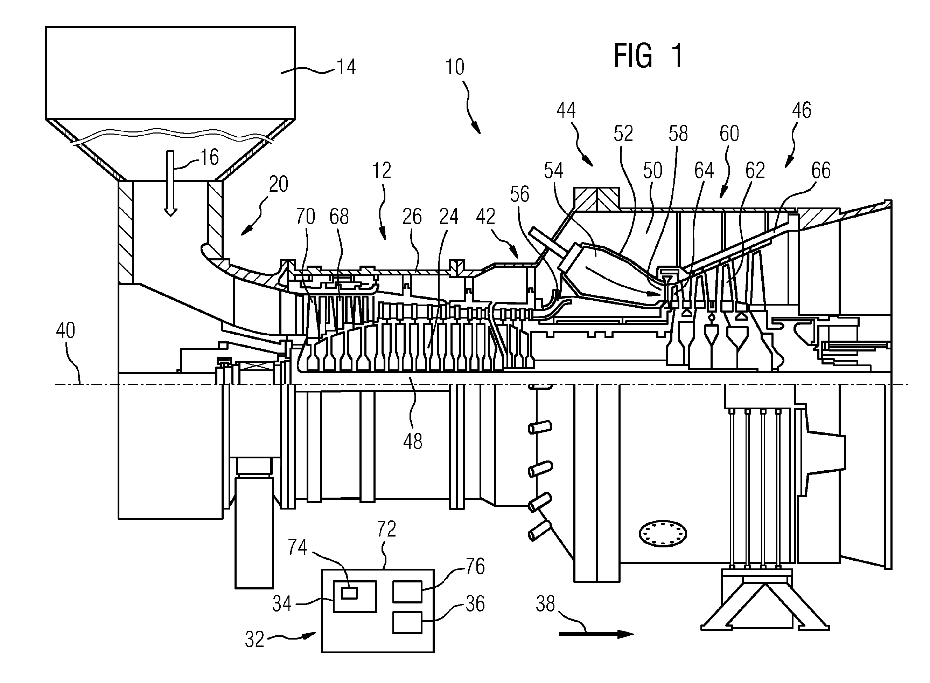

FIG 1 zeigt in einer schematischen Darstellung einen Verdichterstrang 10 in der Form einer Gasturbine. Im folgenden Text werden die Begriffe Verdichterstrang und Gasturbine äquivalent verwendet. Der Verdichterstrang 10 weist in Strömungsrichtung 38 eines Strömungsmediums 16, wie beispielsweise Luft, bzw. entlang einer longitudinalen bzw. einer Rotationsachse 40 eine Kühlvorrichtung 14 bzw. Vorkühlung 14 zum Kühlen des Strömungsmediums 16 auf eine vorgebbare Verdichtertemperatur Tver und einen Verdichtereintritt 20 auf. Hierbei kann die Kühlvorrichtung 14 direkt vor dem Verdichtereintritt 20 angeordnet sein oder weit stromaufwärts vor dem Verdichtereintritt 20. Dies ist in FIG 1 durch die unterbrochene Linienführung zwischen der Kühlvorrichtung 14 und dem Verdichtereintritt 20 gezeigt. Diese Anordnung soll eine möglichst gleichmäßige Zufuhr des Strömungsmediums 16 ermöglichen. Hierbei ist eine Anordnung der Kühlvorrichtung 14 abhängig von der Bauart und der Betriebsart des Verdichterstrangs 10 sowie der Kühlvorrichtung 14 selbst und wird vom Fachmann aufgrund seines Fachwissens selbsttätig bestimmt.

Ferner weist der Verdichterstrang 10 in Strömungsrichtung 38 eine Kompressoreinheit bzw. einen Verdichter 12, einen Verdichteraustritt 42, eine Brennereinheit 44 und eine Turbineneinheit 46 auf. Die Gasturbine weist zudem eine Antriebsachse 48 auf, die um die Rotationsachse 40 rotierbar ist und sich longitudinal entlang der Gasturbine erstreckt. Die Antriebswelle 48 verbindet die Turbineneinheit 46 mit dem Verdichter 12.

Während eines Betriebs der Gasturbine wird das Strömungsmedium 16, bevor es in den Verdichter 12 gelangt mittels der Kühlvorrichtung 14 gekühlt (Details siehe unten). Das Strömungsmedium 16, welches nun am Verdichtereintritt 20 eintritt, wird im Verdichter 12 verdichtet und über den Verdichteraustritt 42 der Brennereinheit 44 zugeführt. Die Brennereinheit 44 weist einen Brennerraum 50 mit einer oder mehreren Brennkammern 52 mit jeweils einem Brenner 54 auf. Die Brennkammer(n) 52 und der Brenner/die Brenner 54 sind im Brennerraum 50 angeordnet. Das aus dem Verdichter 12 kommende komprimierte Strömungsmedium 16 tritt in einen Diffusor 56 ein und wird von diesem in die Brennkammer(n) 52 geleitet, von wo ein Anteil dem Brenner 54 zugeleitet wird und dort mit einem gasförmigen oder flüssigen Treibstoff gemischt wird. Das Strömungsmedium/Treibstoff-Gemisch wird dann verbrannt und das Brenngas bzw. das Arbeitsgas der Verbrennung wird über einen Übergangskanal 58 zu der Turbineneinheit 46 geleitet. Die Turbineneinheit 46 weist mehrere mit der Antriebswelle 48 verbundene Turbinenräder 60 mit Turbinenschaufeln 62 auf. Zudem sind axial zwischen den Turbinenrädern 60 Leitschaufeln 64 angeordnet, die wiederum mit einem Stator 66 der Gasturbine verbunden sind. Das Verbrennungsgas aus der Brennkammer/den Brennkammern 52 tritt in die Turbineneinheit 46 ein und treibt die Turbinenschaufeln 62 an, die wiederum die Antriebswelle 48 rotierend antreiben. Die Leitschaufeln 64 dienen dazu, den Winkel mit dem das Verbrennungsgas bzw. das Arbeitsgas auf die Turbinenschaufeln 62 trifft zu optimieren. Der Verdichter 12 weist eine axiale Abfolge von Leitschaufelstufen 68 und Turbinenschaufelstufen 70 auf. Diese werden durch die Turbinenschaufeln 62 der Turbineneinheit 46 und damit der Antriebswelle 48 angetrieben, wodurch das komprimierte Strömungsmedium 16 von der Gasturbine selbst generiert wird sobald diese in Betreib ist.

Der Verdichterstrang 10 bzw. die Gasturbine weist ferner eine Kontrolleinheit 72 auf, welche zu einer besseren Darstellbarkeit in FIG 1 außerhalb des Verdichterstrangs 10 gezeigt ist. Die Kontrolleinheit 72 weist eine Ermittlungseinrichtung 34 mit zumindest einem Sensor 74, wie beispielsweise eines Temperatursensors, eine Steuereinheit 36 und einen Signalgeber 76 auf. Die Kontrolleinheit 72 dient unter anderem zu einer Überwachung des Verdichterstrangs 10, seiner Bestandteile und des Strömungsmediums 16 und insbesondere von Betriebstemperaturen des Verdichterstrangs 10.

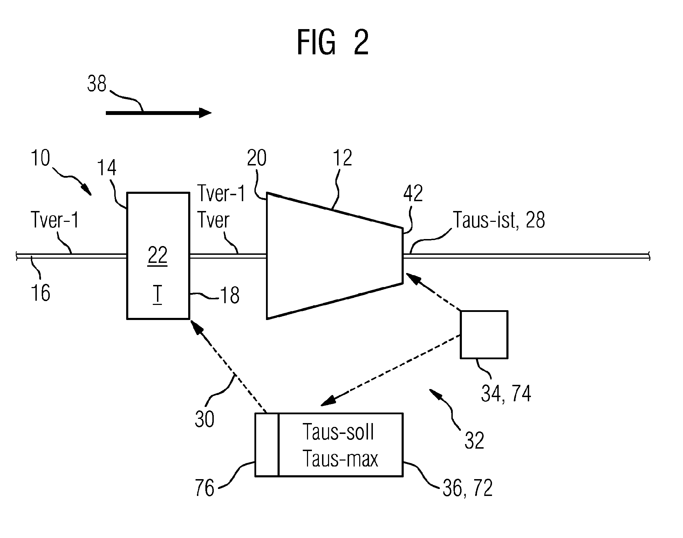

Ein Regelkreis eines Verfahrens zum Betreiben des Verdichterstrangs 10 ist in FIG 2 gezeigt und wird nachfolgend beschrieben. Zu Beginn eines Betriebs der Gasturbine tritt das Strömungsmedium 16 aus einer hier nicht näher bezeichneten Umgebung der Gasturbine in die Kühlvorrichtung 14 bzw. die Vorkühlung 14 ein. Ist die Kühlvorrichtung 14 aktiviert, wird das Strömungsmedium 16 entsprechend der Spezifikationen der Kühlvorrichtung 14 gekühlt und tritt in den Verdichter 12 mit einer ersten Verdichtertemperatur Tver-1, die eine Verdichtereintrittstemperatur (TV1) ist, ein. Danach durchläuft das Strömungsmedium 16 den Verdichter 12 und tritt am Verdichteraustritt 42 aus dem Verdichter 12 aus. Einer Verdichteraustrittstemperatur Taus-ist wird am Verdichteraustritt 42 von der Ermittlungseinrichtung 34 bzw. ihrem Sensor 74 ermittelt und an die Steuereinheit 36 übermittelt.

Die Steuereinheit 36 vergleicht nun diese ermittelte Verdichteraustrittstemperatur Taus-ist mit einer beispielsweise in der Kontrolleinheit 72 hinterlegten Soll-Verdichteraustrittstemperatur Taus-soll. Wird festgestellt, dass die ermittelte Verdichteraustrittstemperatur Taus-ist von der Soll-Verdichteraustrittstemperatur Taus-soll abweicht, wird eine Maßnahme 18 unter Verwendung der Kühlvorrichtung 14 zum Verändern der Verdichtertemperatur Tver-1 des Strömungsmediums 16 am Verdichtereintritt 20 von dem Signalgeber 76 eingeleitet. Der Signalgeber 76 aktiviert hierbei die Kühlvorrichtung 14 soweit, dass diese das Strömungsmedium 16 auf die gewünschte bzw. vorgegebene Verdichtertemperatur Tver kühlt, bevor dieses in den Verdichter 12 eintritt.

Die Maßnahme 18 wird bevorzugt so lange durchgeführt, bis maximal eine vorgegebene und beispielsweise in der Kontrolleinheit 72 hinterlegte Maximalverdichteraustrittstemperatur Taus-max erreicht ist. Diese Max-Verdichteraustrittstemperatur Taus-max wird beispielsweise durch eine Wahl eines Materials, wie beispielsweise das eines Rotors 24 und/oder das eines Gehäuses 26 des Verdichterstrangs 10 bzw. des Verdichters 12 bestimmt (vgl. FIG 1). Die Maximalverdichteraustrittstemperatur Taus-max ist hier die Soll-Verdichteraustrittstemperatur Taus-soll. Grundsätzlich könnte die Soll-Verdichteraustrittstemperatur Taus-soll auch kleiner sein als die Maximalverdichteraustrittstemperatur Taus-max.

Damit stellt die Kontrolleinheit 72 eine Anordnung 32 bzw. einen Regler zur Steuerung der Verdichtertemperatur Tver dar und ein daraus resultierendes Verfahren wird zur Regelung der Verdichteraustrittstemperatur Taus-ist eingesetzt. Hierbei gibt es mehrere Möglichkeiten, um die Verdichtertemperatur Tver einzustellen. Es ist beispielsweise möglich einen Massenstrom eines die Kühlvorrichtung 14 betreibenden Kühlmediums 22 zu verändern und insbesondere zu erhöhen. Dies kann mittels eines Evap-Coolers oder mittels Wet-Compression erfolgen. Damit kann die Kühlvorrichtung 14 beispielsweise ein Evap-Cooler sein.

Bei der Verwendung von Wet-Compression kann die Kühlung des Strömungsmediums 16 auch im Verdichter 12 selbst erfolgen. Hierbei ist die Verdichtertemperatur Tver eine Temperatur, die in zumindest einem Bereich des Verdichters 12 vorherrscht.

Ferner wäre es denkbar, eine Temperatur T eines die Kühlvorrichtung 14 betreibenden Kühlmediums 22 zu verändern und insbesondere zu verringern. Dies kann mittels eines Compressor Inlet Air Chillers (CIAC) erfolgen. Damit kann die Kühlvorrichtung 14 beispielsweise ein Compressor Inlet Air Chiller sein.

Damit stellen die Verdichteraustrittstemperatur Taus-ist eine Regelgröße 28 und der Massenstrom des Kühlmediums 22 und/oder die Temperatur T des Kühlmediums 22 eine Stellgröße 30 dar, wobei mittels der Maßnahme 18 zum Verändern der Verdichtertemperatur Tver des Strömungsmediums 16 eine Änderung der Regelgröße 28 bewirkt wird.

Es ist zudem denkbar, dass die Maßnahme 18 bei Volllast oder bei Teillast des Verdichterstrangs 10 eingeleitet oder betreiben wird.

Somit beschreibt die Erfindung ein Verfahren zum Betreiben des Verdichterstrangs 10 bei dem unter Verwendung des Vorkühlers 14 die Verdichteraustrittstemperatur Taus-ist des im Verdichter 12 verdichteten Strömungsmediums 16 gesteuert wird.

Grundsätzlich wäre es auch denkbar, die Kühlvorrichtung 14 als eine Zwischenkühlung auszugestalten. Hierbei wird das Strömungsmedium 16 bei seiner Durchleitung durch den Verdichter 12 an einer Stelle im Verdichter 12 zu einer Kühlvorrichtung 14 umgeleitet, dort gekühlt und wieder zum Verdichter 12 zurückgeführt, um dort aus dem Verdichteraustritt 42 aus dem Verdichter 12 auszutreten (nicht gezeigt).

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben eines Verdichterstrangs (10) aufweisend zumindest einen Verdichter (12) und zumindest eine Kühlvorrichtung (14) zum Kühlen zumindest eines Strömungsmediums (16) auf eine vorgebbare Verdichtertemperatur (Tver) bei dem
- eine Verdichteraustrittstemperatur (Taus-ist) ermittelt wird;
- diese Verdichteraustrittstemperatur (Taus-ist) mit einer Soll-Verdichteraustrittstemperatur (Taus-soll) verglichen wird und
- bei einer Abweichung von der ermittelten Verdichteraustrittstemperatur (Taus-ist) von der Soll-Verdichteraustrittstemperatur (Taus-soll) eine Maßnahme (18) unter Verwendung der Kühlvorrichtung (14) zum Verändern der Verdichtertemperatur (Tver) des Strömungsmediums (16) am Verdichtereintritt (20) und/oder im Verdichter (12) eingeleitet wird.

2. Verfahren nach Anspruch 1,
**dadurch gekennzeichnet, dass** ein Massenstrom eines die Kühlvorrichtung (14) betreibenden Kühlmediums (22) verändert, insbesondere erhöht, wird und/oder eine Temperatur (T) eines die Kühlvorrichtung (14) betreibenden Kühlmediums (22) verändert, insbesondere verringert, wird.

3. Verfahren nach Anspruch 1 oder 2,
**dadurch gekennzeichnet, dass** die Maßnahme (18) zumindest solange durchgeführt wird, bis maximal eine vorgebbare Maximalverdichteraustrittstemperatur (Taus-max) erreicht wird.

4. Verfahren nach Anspruch 3,
**dadurch gekennzeichnet, dass** die Max-Verdichteraustrittstemperatur (Taus-max) durch eine Wahl zumindest eines Materials eines Rotors (24) und/oder eines Gehäuses (26) des Verdichterstrangs (10) bestimmt wird.

5. Verfahren nach einem der vorhergehenden Ansprüche,
**dadurch gekennzeichnet, dass** die Maßnahme (18) mittels eines Evap-Coolers bewirkt wird.

6. Verfahren nach einem der vorhergehenden Ansprüche,
**dadurch gekennzeichnet, dass** die Maßnahme (18) mittels Wet-Compression bewirkt wird.

7. Verfahren nach einem der vorhergehenden Ansprüche,
**dadurch gekennzeichnet, dass** die Maßnahme mittels eines Compression Inlet Air Chillers (CIAC) bewirkt wird.

8. Verfahren nach einem der vorhergehenden Ansprüche,
**dadurch gekennzeichnet, dass** die Maßnahme (18) bei Volllast oder bei Teillast des Verdichterstrangs (10) eingeleitet wird.

9. Verfahren nach einem der vorhergehenden Ansprüche, eingesetzt zu einer Regelung der Verdichteraustrittstemperatur (Taus-ist).

10. Verfahren nach einem der vorhergehenden Ansprüche, eingesetzt zu einer Regelung der Verdichteraustrittstemperatur (Taus-ist) bei dem
- eine Regelgröße (28) die Verdichteraustrittstemperatur (Taus-ist) ist;
- eine Stellgröße (30) der Massenstrom eines Kühlmediums (22) und/oder die Temperatur (T) eines Kühlmediums (22) ist und
- mittels der Maßnahme (18) zum Verändern der Verdichtertemperatur (Tver) des Strömungsmediums (16) eine Änderung der Regelgröße (28) bewirkt wird.

11. Anordnung (32) zur Steuerung zumindest einer Verdichtertemperatur (Tver) mittels zumindest einer Kühlvorrichtung (14),
- mit einer Ermittlungseinrichtung (34) eingerichtet derart, dass
- eine Verdichteraustrittstemperatur (Taus-ist) ermittelbar ist;
und
- mit einer Steuereinheit (36) eingerichtet derart, dass
- die Verdichteraustrittstemperatur (Taus-ist) mit einer Soll-Verdichteraustrittstemperatur (Taus-soll) vergleichbar ist und
- wenn die ermittelte Verdichteraustrittstemperatur (Taus-ist) von der Soll-Verdichteraustrittstemperatur (Taus-soll) abweicht, eine Maßnahme (18) unter Verwendung der Kühlvorrichtung (14) zum Verändern der Verdichtertemperatur (Tver) des Strömungsmediums (16) am Verdichtereintritt (20) und/oder im Verdichter (12) einleitbar ist.

12. Verdichterstrang (10) mit zumindest einem Verdichter (12) und einer Kühlvorrichtung (14) zum Kühlen zumindest eines Strömungsmediums (16) auf eine vorgebbare Verdichtertemperatur (Tver) sowie mit einer Anordnung (32) nach Anspruch 11.

13. Verfahren zum Betreiben eines Verdichterstrangs (10) aufweisend zumindest einen Verdichter (12) und zumindest eine Vorkühlung (14) zum Kühlen eines Strömungsmediums (16) bei dessen Eintritt in den Verdichter (12) und/oder sich befindend im Verdichter (12) bei dem
- unter Verwendung des Vorkühlers (14) eine Verdichteraustrittstemperatur (Taus-ist) des im Verdichter (12) verdichteten Strömungsmediums (16) gesteuert wird.
